# EUROPÄISCHE PATENTSCHRIFT

(11) **EP 1 475 623 B1**
(45) Veröffentlichungstag und Bekanntmachung des Hinweises auf die Patenterteilung: **31.05.2006**
(21) Anmeldenummer: 04007428.8
(22) Anmeldetag: 26.03.2004
(51) Int. Cl.: G01L 9/12

(54) **Druckmessvorrichtung mit Durchkontaktierung sowie Kontaktierungsverfahren**
Pressure measuring device with feedthrough connection and procedure for making the connection
Dispositif de mesure de pression avec connection transversale et procédé de connection

(30) Priorität: 08.05.2003 DE 10320478
(43) Veröffentlichungstag der Anmeldung: 10.11.2004
(73) Patentinhaber: VEGA Grieshaber KG, 77709 Wolfach (DE)
(72) Erfinder: Jacob, Joern, 77792 Wolfach-Kirnbach (DE)
(74) Vertreter: Patentanwälte Westphal, Mussgnug & Partner

(56) Entgegenhaltungen:
- DE-A- 4 231 120
- DE-A- 10 052 053

## Beschreibung

Die Erfindung bezieht sich auf ein Verfahren zum Kontaktieren einer Membranelektrode an einem Grundkörper einer Druck-Messanordnung mit den oberbegrifflichen Merkmalen des Patentanspruchs 1 bzw. eine Druck-Messanordnung mit den oberbegrifflichen Merkmalen des Patentanspruchs 6.

Ein solches Verfahren bzw. eine solche Druck-Messanordnung ist aus DE 42 31 120 C2 oder Wo 02/33372 A1 bekannt.

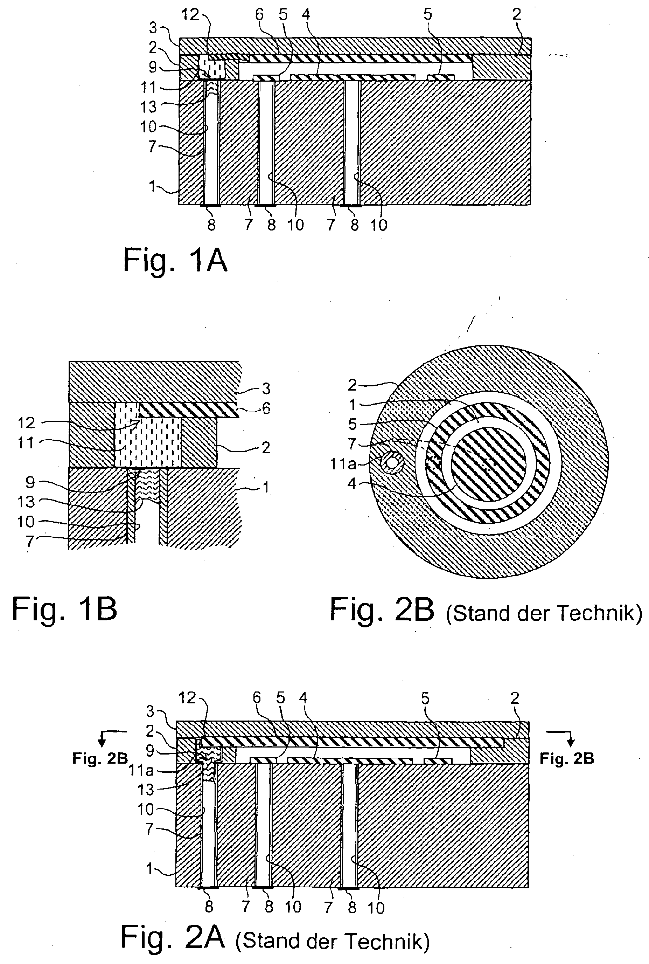

Allgemein bekannte Druck-Messanordnungen sind mit kapazitiven Messzellen ausgestattet, bei denen eine Kapazität zwischen zwei Elektrodenflächen gemessen wird, wobei die Elektrodenflächen einander gegenüberliegen, zueinander beabstandet und voneinander elektrisch isoliert sind. Eine beispielhafte Druck-Messanordnung ist anhand Fig. 2A in seitlicher Querschnittsdarstellung durch die Druck-Messanordnung und Fig. 2B in dazu senkrechter Querschnittsdarstellung durch ein Verbindungselement in Draufsicht dargestellt. An einer Seite eines Grundkörpers 1 ist zumindest eine Elektrode 4, 5 angeordnet, welche eine der beiden Elektrodenflächen ausbildet. Im seitlichen Umfangsbereich sitzt auf dieser Seite des Grundkörpers 1 ein Distanzelement in Form eines aus Glaslot gefertigten elektrisch isolierenden Materials als Distanz- und Verbindungselement 2. Auf diesem Verbindungselement 2 ist eine Membran 3 angeordnet, an deren Unterseite eine Membranelektrode 6 angeordnet ist, welche die zweite Elektrodenfläche ausbildet. Zum Kontaktieren der Elektroden 4 - 6 mit entsprechenden Anschlussstellen 8 zum externen Abgreifen von Spannungen der Elektroden 4 - 6 führen durch den Grundkörper 1 rohrförmige Grundkörper-Durchkontaktierungen 7. Diese weisen üblicherweise elektrisch leitendes Wandungsmaterial auf. Zum Anschluss der Membranelektrode 6 führt außerdem eine Durchkontaktierungs-Öffnung 11a durch das Verbindungselement 2 hindurch. Während des Verbindungsprozesses von Membran 3, Verbindungselement 2 und Grundkörper 1 muss diese Durchkontaktierungs-Öffnung 11a im Verbindungselement 2 genau ausge richtet über der entsprechenden Grundkörper-Durchkontaktierungs-Öffnung 7 liegen. Dies erfordert entsprechend zusätzliche Arbeitsgänge, z. B. das Bereitstellen von einem Grundkörper 1 und einem Verbindungselement 2 mit zuvor angebrachten Markierungen und deren Ausrichtung. Nach einer festen Verbindung zwischen Membran 3, Verbindungselement 2 und Grundkörper 1 wird ein leitfähiges Material, z. B. leitfähiger Kleber oder Leitpaste, in die Grundkörper-Durchkontaktierungs-Öffnung 7 und darüber auch in die Verbindungselement-Durchkontaktierungs-Öffnung 11a eingefüllt, um die Strecke zwischen Membran 6 und Grundkörper 1 zu überbrücken und somit eine elektrische Verbindung zwischen einerseits der Membran 3 und deren Membranelektrode 6 und andererseits der entsprechenden Grundkörper-Durchkontaktierung 7 auszubilden. In einem anschließenden Verfahrensschritt wird die Paste eingebrannt bzw. der Kleber ausgehärtet.

Eine derartige Druck-Messanordnung sowie deren Herstellung sind aufgrund der Vielzahl von Arbeitsschritten, insbesondere dem Markieren und Ausrichten der einzelnen Elemente zueinander nachteilhaft. Die Verbindungselement-Durchkontaktierungs-Öffnung 11a stellt außerdem eine mechanische Schwachstelle in dem Verbindungselement 2 dar.

Die Aufgabe der Erfindung besteht darin, ein verbessertes Verfahren zum Kontaktieren einer Membranelektrode an einem Grundkörper einer Druck-Messanordnung bzw. eine Druck-Messanordnung mit einem einfacheren Aufbau bereitzustellen.

Diese Aufgabe wird durch ein Verfahren zum Kontaktieren einer Membranelektrode an einem Grundkörper einer Druck-Messanordnung mit den Schritten des Patentanspruchs 1 bzw. durch eine Druck-Messanordnung mit den Merkmalen des Patentanspruchs 6 gelöst.

In für sich bekannter Art und Weise werden bei dem Verfahren zum Kontaktieren einer Membranelektrode an einem Grundkörper einer Druck-Messanordnung nacheinander mehrere Herstellungschritte vorgenommen. So wird eine Membran, an der die Membranelektrode angeordnet ist, mit dem Grundkörper über ein Verbindungselement aus einem elektrisch isolierenden Material zwischen diesen verbunden, wobei der Grundkörper eine Durchkontaktierungs-Öffriung zwischen einer Verbindungsstelle mit dem elektrisch isolierenden Material des Verbindungselements und einer Anschlussstelle zum Abgreifen von Spannungen der Elektroden aufweist. Außerdem weist das Verbindungselement eine Verbindungselement-Durchkontaktierung zwischen der Verbindungsstelle am Grundkörper und der Membran oder der Membranelektrode auf. Erfolgt die Verbindung von Membran Verbindungselement und Grundkörper durch Erhitzen und ggfs. Aufschmelzen des Verbindungselements, erfolgt das Bereitstellen eines leitfähigen Kontaktierungsmaterials in der Grundkörper-Durchkontaktierungs-Öffnung anschließend. Möglich ist aber auch die direkte Verwendung eines Grundkörpers, in dessen Grundkörper-Durchkontaktierungs-Öffnung bereits ein solches leitfähiges Kontaktierungsmaterial zuvor bereitgestellt wurde bzw. eingebracht wurde. Verfahrensgemäß wird als das Kontaktierungsmaterial ein Material verwendet, aus welchem beim Aktivieren, insbesondere durch Erhitzen, Ionen in das elektrisch isolierende Material eindringen und dieses in dem entsprechenden Abschnitt leitfähig machen und dadurch eine Durchkontaktierung zur Membran hin ausbilden. Das Eindringen kann dabei insbesondere durch Diffundieren und Migrieren erfolgen. Entsprechend weist eine Druck-Messanordnung eine Verbindungselement-Durchkontaktierung aus einem elektrisch leitfähigen Abschnitt mit leitfähigen Ionen in dem ansonsten elektrisch isolierenden Material auf.

Vorteilhafte Ausgestaltungen sind Gegenstand abhängiger Ansprüche.

Das elektrisch isolierende Material ist vorteilhafterweise Glas, insbesondere Glas, welches aus bei dem Zusammenbau verwendetem Glaslot durch Erhärtung verfestigt ist und neben der Funktion des Verbindungselements zum festen Verbinden von Membran und Grundkörper auch die Funktion eines Distanzhalters übernimmt.

Als Kontaktierungsmaterial wird bevorzugt eine silberhaltige Paste, insbesondere Silberpaste oder Silber-Palladium-Paste verwendet, welche durch das Erhitzen aushärtet und dabei Ionen in das benachbarte Material des Verbindungselements abgibt. Das Kontaktierungsmaterial wird vorteilhafterweise nach dem Verfestigen von Membran, elektrisch isolierendem Material als Verbindungselement und Grundkörper in die Grundkörper-Durchkontaktierungs-Öffnung eingebracht, damit eine kontrollierte Reaktion durch ein entsprechend geeignetes Erhitzen ausgelöst werden kann. Natürlich ist auch ein vorheriges Einbringen möglich, insbesondere, wenn die Membran, das Verbindungselement und der Grundkörper miteinander verklebt werden und keine vorherige übermäßige Erhitzung stattfindet.

Vorteilhaft ist beim Erhitzen das Anlegen eines Feldes insbesondere elektrischen oder elektromagnetischen Feldes, um das Eindringen der Ionen aus dem Kontaktierungsmaterial in das elektrisch isolierende Material in einer gerichteten Richtung zu unterstützen.

Ein Ausführungsbeispiel wird nachfolgend anhand der Zeichnung näher erläutert. Es zeigen:
- Fig. 1A: einen Querschnitt durch eine Druck-Messanordnung in seitlicher Ansicht;
- Fig. 1B: einen vergrößerten Ausschnitt davon;
- Fig. 2A: einen seitlichen Querschnitt durch eine Anordnung gemäß dem Stand der Technik und
- Fig. 2B: einen Querschnitt durch ein Verbindungselement in einer Ebene senkrecht zur Darstellung von Fig. 2A.

Die Fig. 1A und 1B zeigen einen Querschnitt bzw. einen Ausschnitt dazu eines bevorzugten Sensors, wobei Fig. 1B eine geringfügig modifizierte Ausführungsform zeigt. Die bevorzugte Ausführungsform hat dabei einen zylindrischen Querschnitt, ähnlich dem des Sensors gemäß Fig. 2B.

Dargestellt ist eine kapazitive Messzelle zum Erfassen eines Drucks, bei welcher die vom anliegenden Druck abhängige Kapazität zwischen zwei gegenüberliegenden und zueinander beabstandeten und isolierten Elektrodenflächen bestimmt wird. Beim dargestellten Ausführungsbeispiel befindet sich eine erste Elektrodenfläche als Membranelektrode 6 an der innenliegenden Seite einer druckempfindlichen Membran 3. Die zweite Elektrodenfläche ist an der innenliegenden Seite eines Grundkörpers 1 angeordnet. Unter innenliegend wird dabei die Anordnung in dem zwischen der Membran 3 und dem Grundkörper 1 befindlichen Raum verstanden. Die Membran 3 und der Grundkörper 1 sind zueinander beabstandet und bestehen aus einem elektrisch nicht leitfähigen Material.

Die Verbindung zwischen der Membran 3 und dem Grundkörper 1 erfolgt über ein Verbindungselement 2, welches neben der Verbindungsfunktion zugleich die Funktion eines Distanzelements aufweist. Das Verbindungselement 2 besteht vorteilhafterweise aus Glas, welches aus Glaslot gebildet wird und eine feste unlösbare und isolierende Verbindung der Membran 3 und des Grundkörpers 1 ausbildet.

Auf der Oberseite des Grundkörpers 1 und an der Membran 3 können auch weitere Elektroden angeordnet sein. Dargestellt ist auf der Oberfläche des Grundkörpers 1 eine Referenzelektrode 5, welche die kreisförmige Messelektrode 4 beabstandet umringt. Zum Anschluss der Elektroden 4 - 6 sind entsprechende Anschlussstellen 8 an der den Elektroden 4, 5 gegenüberliegenden Seite des Grundkörpers 1 ausgebildet. Die Elektroden 4 - 6 bestehen aus einem gut leitfähigen Material, insbesondere Gold. Diese Anschlussstellen dienen beispielsweise als Lötpads oder sonstige übliche Abgriffe zum Anschluss des Druck-Sensors an beispielsweise eine Auswerteelektronik. Die elektrische Verbindung zwischen den Anschlussstellen 8 und der jeweils zugeordneten der Elektroden 4 - 6 erfolgt über Durchkontaktierungen 7, welche durch den Grundkörper 1 hindurchführen. Für den Anschluss der Messelektrode 4 und der Referenzelektrode 5 kann es sich dabei um einen einfachen Leiter handeln. Bei der dargestellten Ausführungsform sind die Messelektrode 4 und die Referenzelektrode 5 jedoch über rohrförmige Durchkontaktierungs-Öffnungen 7 verbunden, wobei die Durchkontaktierungs-Öffnungen 7 eine leitfähige Wandung 10 zum Herstellen der elektrischen Verbindung zwischen der Anschlussstelle 8 und der entsprechenden Elektrode 4 bzw. 5 aufweisen.

Für den Anschluss der Membranelektrode 6 führt durch den Grundkörper 1 ebenfalls eine Durchkontaktierungs-Öffnung 7 von einer Anschlussstelle 8 bis zu einer Verbindungsstelle 9 zwischen dem Grundkörper 1 und dem Verbindungselement 2. Das Verbindungselement 2 besteht dabei aus einem elektrisch isolierenden Material, insbesondere aus einem aus Glaslot gefertigten Glaskörper. Auf der Seite des Verbindungselements 2, welches der Verbindungsstelle 9 zum Grundkörper 1 gegenüberliegt, befindet sich eine Anschlussstelle 12 zwischen dem Verbindungselement 2 und der Membran 3. Diese Anschlussstelle 12 ist gemäß der in Fig. 1A dargestellten Ausführungsform aus einem elektrisch leitenden Kontaktelement ausgebildet, welches eine elektrische Verbindung zur Membranelektrode 6 ausbildet und bereitstellt. Bei der in Fig. 1B dargestellten Ausführungsform wird diese Anschlussstelle direkt durch die Membranelektrode 6 ausgebildet, welche sich bis in den Bereich der Anschlussstelle 12 erstreckt.

Um eine elektrische Verbindung durch das ansonsten elektrisch isolierende Verbindungselement 2 zwischen der Verbindungsstelle 9 und der Anschlussstelle 12 auszubilden, wird bei der Herstellung des Druck-Sensors ein Kontaktierungsmaterial 13 in der Durchkontaktierungs-Öffnung 7 bereitgestellt. Die Bereitstellung erfolgt dabei je nach vorherigen und nachfolgenden erforderlichen Fertigungsschritten vor oder nach dem Zusammensetzen von Grundkörper 1, Verbindungselement 2 und Membran 3 sowie Erhärten des Verbindungselements 2 durch beispielsweise eine starke Erhitzung von Glaslot.

Das Kontaktierungsmaterial 13 besteht aus einem Material, welches bei einer entsprechend geeigneten Aktivierung Ionen an das benachbarte Material des Verbindungselements 2 abgibt. Bevorzugt wird als Kontaktierungsmaterial 13 eine silberhaltige Paste, insbesondere Silberpaste oder Silber-Palladium-Paste, welche bei einer Erhitzung verstärkt Silber-Ionen in das Material des Verbindungselements 2, also bevorzugt in Glas bzw. Glaslot wandern lässt. Dadurch wird das ansonsten elektrisch isolierende Material des Verbindungselements 2 in dem Bereich zwischen der Verbindungsstelle 9 an dem Grundkörper 1 zum Verbindungselement 2 einerseits und andererseits der Anschlussstelle 12 an der Membran 3 zum Verbindungselement 2 hin elektrisch leitfähig. Eine durchgehende elektrische Kontaktierung ist somit von der externen Anschlussstelle 8 über das leitende Wandungsmaterial 10 der Durchkontaktierungs-Öffnung 7, den Bereich der Verbindungsstelle 9 zwischen Grundkörper 1 und der derart erzeugten Durchkontaktierung 11 durch den weiterhin festen Körper des Verbindungselements 2 bis hin zur Anschlussstelle 12 zwischen dem Verbindungselement 2 und der Membran 3 und darüber zur Membranelektrode 6 ausgebildet.

Anstelle einer Aussparung in der Glaslot-Verbindung bzw. dem Glaskörper des Verbindungselements 2 wie beim Stand der Technik weist das bevorzugte Ausführungsbeispiel keine derartige Materialschwächung des Verbindungselements 2 durch eine Durchgangsöffnung (11a in Fig. 2A) oder eine anschließend mit einem Kontaktierungsmaterial gefüllte Durchgangsöffnung auf. Insbesondere kann der Zusammenbau ohne eine spezielle Ausrichtung von Membran 3, Verbindungselement 2 und Grundkörper 1 mit Blick auf Durchkontaktierungs-Öffnungen erfolgen. Dies bedingt bei der Fertigung weniger Arbeitsaufwand, weniger Arbeitsgänge und somit eine Kostenreduktion. Außerdem entfällt die mechanische Schwachstelle in dem Verbindungselement 2, da das ansonsten elektrisch isolierende Material des Verbindungselements 2 während eines Temperaturprozesses durch eine Ionen-Migration aus dem Kontaktierungsmaterial 13 lokal leitfähig gemacht wird.

Um das Eindringen, insbesondere Migrieren oder Diffundieren der elektrisch leitfähigen Ionen aus dem Kontaktierungsmaterial 13 in das benachbarte elektrisch isolierende Material des Verbindungselements 2 zu unterstützen, kann bei dem Aktivieren, insbesondere Erhitzen des Kontaktierungsmaterials 13 zusätzlich ein elektrisches oder elektromagnetisches Feld durch die Druck-Messanordnung hindurch angelegt werden, welches insbesondere im gewünschten Bereich des Kontaktierungsmaterials 13 und der auszubildenden Verbindungselement-Durchkontaktierung auf die elektrisch leitfähigen Ionen einwirkt.

Während bei dem Ausführungsbeispiel gemäß Fig. 1A eine Durchkontaktierungs-Öffnung 7, 10 durch den Grundkörper 1 hindurch dargestellt ist, kann natürlich auch ein Grundkörper 1 bereitgestellt werden, bei dem eine massive elektrische Leitung zu einem Aufnahmeraum für das Kontaktierungsmaterial 13 geführt ist. Der Aufnahmeraum kann beispielsweise eine Ausnehmung in dem Bereich der Oberfläche des Grundkörpers 1 sein, welchem nach dem Zusammenbau das Verbindungselement 2 gegenüber liegt.

Insbesondere bei einer Membran 3 mit einer Membranelektrode 6 oder einem entsprechenden Anschluss 12 für die Membranelektrode 6, welche sich bis in den Kontaktierungsbereich der Verbindungselement-Durchkontaktierung 11 räumlich erstrecken, können alle drei Grundelemente, die Membran 3, das Verbindungselement 2 und der Grundkörper 1, ohne eine speziell erforderliche Ausrichtung zusammengesetzt werden, woraufhin nach dem festen räumlichen Verbinden dieser Grundelemente durch die Aktivierung des Kontaktierungsmaterials 13 die Durchkontaktierung 11 durch das Verbindungselement 2 ausgebildet wird.

### Bezugszeichenliste:

- 1: Grundkörper
- 2: elektrisch isolierendes Verbindungselement
- 3: Membran
- 4: Messelektrode
- 5: Referenzelektrode
- 6: Membranelektrode
- 7: Durchkontaktierungs-Öffnung
- 8: Anschlussstelle, extern an 1
- 9: Verbindungsstelle von 1 zu 2
- 10: Wandung in 7/leitendes Wandungsmaterial
- 11: Verbindungselement- Durchkontaktierung/leitfähiger Glasabschnitt
- 11a: Verbindungselement-Durchkontaktierungs-Öffnung
- 12: Anschlussstelle von 2 zu 3/6
- 13: Kontaktierungsmaterial

## Patentansprüche

1. Verfahren zum Kontaktieren einer Membranelektrode (6) einer Druck-Messanordnung mit den Schritten:
- Verbinden einer Membran (3), an der die Membranelektrode (6) angeordnet ist, mit einem Grundkörper (1) über ein Verbindungselement (2) aus einem elektrisch isolierenden Material zwischen diesen, wobei der Grundkörper (1) eine Durchkontaktierung (7, 10) zwischen einer Anschlussstelle (8) und einer Verbindungsstelle (9) zum elektrisch isolierenden Material (2) aufweist und das Verbindungselement (2) eine Verbindungselement-Durchkontaktierung (11) zwischen der verbindungsstelle (9) und der Membran (3) oder Membranelektrode (6) aufweist,
- Bereitstellen eines leitfähigen Kontaktierungsmaterials (13) in der Durchkontaktierung (7, 10) und
- Aktivieren, insbesondere Verfestigen durch Erhitzen lassen des Kontaktierungsmaterials (13),
**dadurch gekennzeichnet, dass**
- als das Kontaktierungsmaterial (13) ein Material verwendet wird, aus dem beim Aktivieren, insbesondere Erhitzen, Ionen in das elektrisch isolierende Material eindringen und dieses unter Ausbildung der Verbindungselement-Durchkontaktierung (11) leitfähig machen.

2. Verfahren nach Anspruch 1, bei dem als das elektrisch isolierende Material des Verbindungselements (2) Glas, insbesondere Glaslot verwendet wird.

3. Verfahren nach Anspruch 1 oder 2, bei dem als das Kontaktierungsmaterial (13) silberhaltige Paste, insbesondere Silberpaste oder Silber-Palladium-Paste verwendet wird.

4. Verfahren nach einem vorstehenden Anspruch, bei dem das Kontaktierungsmaterial (13) nach dem verfestigten Zusammensetzen von Membran (3), Verbindungselement (2) und Grundkörper (1) in die als Durchkontaktierungs-Öffnung (7, 10) ausgebildete Durchkontaktierung durch den Grundkörper (1) eingefüllt wird.

5. Verfahren nach einem vorstehenden Anspruch, bei dem beim Aktivieren des Kontaktierungsmaterials (13) ein Feld, insbesondere ein elektrisches oder elektromagnetisches Feld über zumindest den Bereich der Verbindungselement-Durchkontaktierung (11) zum gerichteten Eindringen der Ionen angelegt wird.

6. Druck-Messanordnung, insbesondere hergestellt mit einem Verfahren nach einem vorstehenden Anspruch, mit
- einer Membran (3),
- zumindest einer Elektrode (6) an der Membran (3),
- einem Grundkörper (1),
- einem Verbindungselement (2) aus einem elektrisch isolierenden Material zwischen Membran (3) und Grundkörper (1),
- einer Grundkörper-Durchkontaktierung (7, 10) von einer Anschlussstelle (8) am Grundkörper (1) zu einer Verbindungsstelle (9) zwischen Grundkörper (1) und dem Verbindungselement (2) und
- einer Verbindungselement-Durchkontaktierung (11) von einer Anschlussstelle (12) an der Membran (3) oder Elektrode (6) an der Membran (3) und dem Verbindungselement (2) durch das Verbindungselement (2) hindurch zu der Verbindungsstelle (9) zum Grundkörper (1),
**dadurch gekennzeichnet, dass**
- die Verbindungselement-Durchkontaktierung (11) aus einem elektrisch leitfähigen Abschnitt mit elektrisch leitfähigen Ionen in dem ansonsten elektrisch isolierenden Material ausgebildet ist.

7. Messanordnung nach Anspruch 6, bei der die Grundkörper-Durchkontaktierung (7, 10) ein elektrisch leitfähiges Kontaktierungsmaterial (13) enthält, welches beim Aktivieren, insbesondere beim Erhitzen die elektrisch leitfähigen Ionen abgibt.

8. Messanordnung nach Anspruch 6 oder 7, bei der das Kontaktierungsmaterial (13) silberhaltig ist, insbesondere eine Silberpaste oder Silber-Palladium-Paste ist.

9. Messanordnung nach einem der Ansprüche 6 - 8, bei der das elektrisch isolierende Material des Verbindungselements (2) Glas, insbesondere erhärtetes Glaslot ist.

10. Messanordnung nach einem der Ansprüche 6 - 9, bei der die Verbindungselement-Durchkontaktierung (11) ursprünglich aus dem Kontaktierungsmaterial (13) stammende Ionen aufweist.

## Claims

1. A method for bonding a membrane electrode (6) of a pressure-measuring assembly, comprising the following steps:
- connecting a membrane (3), on which the membrane electrode (6) is disposed, to a main body (1) via a connection element (2) made from an electrically insulating material between them, where the main body (1) comprises a feedthrough (7, 10) between a connection point (8) and a junction (9) to the electrically insulating material (2) and the connection element (2) comprises a connection element feedthrough (11) between the junction (9) and the membrane (3) or membrane electrode (6),
- provision of a conductive bonding material (13) in the feedthrough (7, 10) and
- activating, in particular hardening, the bonding material (13) by heating,
**characterised in that**
- as the bonding material (13 there is used a material from which, during activation, in particular heating, ions penetrate into the electrically insulating material and make it conductive with the formation of the connection element feedthrough (11).

2. A method according to Claim 1, in which glass, in particular glass solder, is used as the electrically insulating material of the connection element (2).

3. A method according to Claim 1 or 2, in which argentiferous paste, in particular silver paste or silver-palladium paste, is used as the bonding material (13).

4. A method according to a preceding Claim, in which the bonding material (13) is filled through the main body (1) into the feedthrough designed as the feedthrough aperture (7, 10) after the strengthened assembly of the membrane (3), the connection element (2) and the main body (1).

5. A method according to a preceding Claim, in which, upon the activation of the bonding material (13), a field, in particular an electrical or electromagnetic field, is applied via at least the region of the connection element feedthrough (11) for the directed penetration of the ions.

6. A pressure-measuring assembly, in particular manufactured using a method according to a preceding Claim, comprising
- a membrane (3),
- at least one electrode (6) on the membrane (3),
- a main body (1),
- a connection element (2) made from an electrically insulating material between the membrane (3) and the main body (1),
- a main body feedthrough (7, 10) from a connection point (8) on the main body (1) to a junction (9) between the main body (1) and the connection element (2), and
- a connection element feedthrough (11) from a connection point (12) on the membrane (3) or the electrode (6) on the membrane (3) and the connection element (2) through the connection element (2) to the junction (9) to the main body (1),
**characterised in that**
- the connection element feedthrough (11) is constructed from an electrically conductive portion having electrically conductive ions in the otherwise electrically insulating material.

7. A measuring assembly according to Claim 6, in which the main body feedthrough (7, 10) contains an electrically conductive bonding material (13), which upon activation, in particular upon heating, releases the electrically conductive ions.

8. A measuring assembly according to Claim 6 or 7, in which the bonding material (13) contains silver, in particular it is a silver paste or a silver-palladium paste.

9. A measuring assembly according to one of Claims 6 - 8, in which the electrically insulating material of the connection element (2) is glass, in particular hardened glass solder.

10. A measuring assembly according to one of Claims 6 - 9, in which the connection element feedthrough (11) comprises ions originally coming from the bonding material (13).

## Revendications

1. Procédé de connexion d'une électrode à membrane (6) d'un dispositif de mesure de pression comportant les étapes consistant à :
- relier une membrane (3) supportant l'électrode à membrane (6) à un corps de base (1) par un connecteur (2) en matériau électriquement isolant disposé entre eux, le corps de base (1) présentant une connexion transversale (7, 10) entre un point de connexion (8) et une jointure (9) vers le matériau d'isolation électrique (2) et l'élément de jonction (2) présentant une connexion transversale (11) entre la jointure (9) et la membrane (3) ou l'électrode à membrane (6),
- préparer un matériau de connexion conducteur (13) dans la connexion transversale (7, 10) et
- activer, notamment fixer par chauffage, le matériau de connexion (13),
**caractérisé en ce que**
- comme matériau de connexion (13) on utilise un matériau dont sortent des ions lors de l'activation, notamment du chauffage, pour pénétrer dans le matériau électriquement isolant et le rendre conducteur en formant la connexion transversale (11).

2. Procédé selon la revendication 1,
**caractérisé en ce que**
comme matériau isolant du connecteur (2)on utilise du verre, notamment du verre de soudure.

3. Procédé selon la revendication 1 ou 2,
**caractérisé en ce que**
comme de matériau de connexion (13) on utilise une pâte argentifère, notamment une pâte argentée ou une pâte de palladium/argent.

4. Procédé selon l'une quelconque des revendications précédentes,
**caractérisé en ce que**
le matériau de connexion (13) est versé après l'assemblage par fixation de la membrane (3), du connecteur (2) et du corps de base (1) dans la connexion transversale formée pour servir d'ouverture de connexion transversale (7, 10) à travers le corps de base (1).

5. Procédé selon l'une quelconque des revendications précédentes,
**caractérisé en ce que**
lors de l'activation du matériau de connexion (13), on réalise un champ, notamment un champ électrique ou électromagnétique, sur au moins la zone de la connexion transversale (11) pour la pénétration alignée des ions.

6. Dispositif de mesure de pression, notamment fabriqué avec un procédé selon l'une des revendications précédentes, et comprenant :
- une membrane (3);
- au moins une électrode (6) sur la membrane (3).
- un corps de base (1).
- un connecteur (2) en matériau électriquement isolant entre la membrane (3) et le corps de base (I),
- d'une connexion transversale (7, 10) allant d'un point de connexion (8) sur le corps de base (1) à une jointure (9) entre le corps de base (1) et le connecteur (2), et
- une connexion transversale de connecteur (1) allant d'un point de connexion (12) sur la membrane (3) ou d'une électrode (6) sur la membrane (3) et le connecteur (2) à travers le connecteur (2) jusqu'à la jointure (9) vers le corps de base (1),
**caractérisé en ce que**
la connexion transversale (11) est formée par une section électriquement conductrice avec des ions électriquement conducteurs dans le matériau pour le reste électriquement isolant.

7. Dispositif de mesure selon la revendication 6,
**caractérisé en ce que**
la connexion transversale de corps de base (7, 10) comprend un matériau de connexion électriquement conducteur (13) qui émet des ions électriquement conducteurs notamment lors du chauffage.

8. Dispositif de mesure selon la revendication 6 ou 7.
**caractérisé en ce que**
le matériau de connexion (13) est argentifère, notamment une pâte argentée ou une pâte de palladium/argent.

9. Dispositif de mesure selon l'une quelconque des revendications 6 à 8.
**caractérisé en ce que**
le matériau électriquement isolant du connecteur (2) est du verre, notamment du verre de soudure durci.

10. Dispositif de mesure selon l'une quelconque des revendications 6 à 9,
**caractérisé en ce que**
la connexion transversale de connecteur (11) présente initialement des ions provenant du matériau de connexion (13).
